# EUROPÄISCHE PATENTSCHRIFT

(11) **EP 0 561 326 B1**
(45) Veröffentlichungstag und Bekanntmachung des Hinweises auf die Patenterteilung: **06.12.1995**
(21) Anmeldenummer: 93104182.6
(22) Anmeldetag: 15.03.1993
(51) Int. Cl.: B60C 11/11

(54) **Motorradreifen**
Motorcycle tyre
Bandage pneumatique pour moto

(30) Priorität: 16.03.1992 DE 4208391
(43) Veröffentlichungstag der Anmeldung: 22.09.1993
(73) Patentinhaber: METZELER REIFEN GmbH, D-80974 München (DE)
(72) Erfinder: Haas, Johann, W-8000 München 2 (DE)
(74) Vertreter: Preissner, Nicolaus, Dipl.-Ing.

(56) Entgegenhaltungen:
- EP-A- 0 145 009
- FR-A- 915 325
- GB-A- 691 587
- GB-A- 1 360 203
- US-A- 1 557 984

## Beschreibung

Die Erfindung bezieht sich auf einen Motorradreifen mit einer Lauffläche, in die quer oder im Winkel zur Umfangsrichtung verlaufende Profilrillen eingeschnitten sind, die zwischen sich entsprechende Profilblöcke begrenzen.

Bei Laufflächenprofilen von Motorradreifen war es früher üblich, diese mit umlaufenden Rillen, deren Tiefe etwa gleich der Rillenbreite ist, zu versehen. Solche umlaufenden, relativ breiten und tiefen Rillen bedingen jedoch eine relativ niedrige Schräglaufsteifigkeit dieser Reifen, wodurch eine ausreichende Fahrstabilität im Hochgeschwindigkeitsbereich nicht mehr gewährleistet war. Außerdem ergab sich eine geringe axiale Steifigkeit des Profils, die die übertragbaren Seitenkräfte einschränkte.

Eine Verbesserung der Verhältnisse ergab sich dann mit einem Reifenprofil mit stark quer orientierter Profilgestaltung, wie es in der gattungsgemäßen EP-A-0 145 009 beschrieben ist, das aber immer noch eine Mittelrille aufweist. Hinsichtlich Fahrstabilität und Kraftübertragungsverhalten war dieses Profil den bis dahin üblichen Rillenprofilen stark überlegen.

Ein weiterer Schritt zur Erhöhung der Schräglaufsteifigkeit und der übertragbaren Brems- und Seitenkräfte stellte dann ein Profil ohne umlaufende Rillen oder umfangsorientierte Rillenabschnitte dar, wie es z.B. in Prospekten der Metzeler Reifen GmbH unter der Bezeichnung "ME 1 Front" beschrieben ist. Mit einer solchen Profilgestaltung ergab sich ein praktisch optimales Fahrverhalten.

Es gibt jedoch Motorräder, bei denen aufgrund der Fahrwerksauslegung, der Geometrie und der Lastverteilung im Geschwindigkeitsbereich zwischen 40 und 80 km/h ein sog. Lenkerflattern oder Shimmy auftritt. Unter Lenkerflattern versteht man dabei eine kraftradtypische Eigenschwingungsform des Lenksystems um die Lenkachse mit einer Frequenz von ca. 7 Hz.

Ausgehend von dem vorstehend beschriebenen Stand der Technik liegt der vorliegenden Erfindung die Aufgabe zugrunde, eine Profilgestaltung für einen Motorradreifen anzugeben, mit der dieses Lenkerflattern nicht mehr auftritt, ohne daß dadurch aber die Kraftübertragungseigenschaften des Reifens eingeschränkt werden.

Zur Lösung dieser Aufgabe ist erfindungsgemäß vorgesehen, daß die Lauffläche im Zenit und jeweils seitlich davon insgesamt drei umlaufende, schmale Rillen aufweist, die die Profilrillen anschneiden und deren Tiefe etwa 70 bis 100% der Tiefe der Hauptprofilrillen beträgt.

Diese umlaufenden schmalen Rillen, deren Breite bei maximal 1,5 mm liegt, senken den Schräglaufkoeffizienten des Reifens und wirken damit der Neigung zum Lenkerflattern entgegen, ohne daß die erforderlichen Eigenschaften des Reifens bezüglich der Kraftübertragung eingeschränkt sind. Dabei entkoppeln im Bereich kleiner Schräglaufwinkel um die Nullage die Rillen die einzelnen Profilrippen. Bei Auftreten von Umfangs- und Seitenkräften schließen sich diese schmalen Rillen, so daß die einzelnen Rippen wie ein kompakter Block arbeiten.

Besonders vorteilhaft ist es ferner, wenn der jeweilige Abstand der beiden seitlichen Rillen von der mittleren Rille 10 bis 20 mm beträgt.

Anhand einer schematischen Zeichnung sind Aufbau und Funktionsweise eines Ausführungsbeispiels nach der Erfindung näher erläutert. Dabei zeigen:
- Fig. 1: eine Aufsicht auf die Abwicklung eines Lauffächenabschnittes mit der erfindungsgemäßen Profilgestaltung und
- Fig. 2: einen Querschnitt durch die Lauffläche eines solchen Reifens entsprechend der Schnittlinie II-II nach Fig. 1.

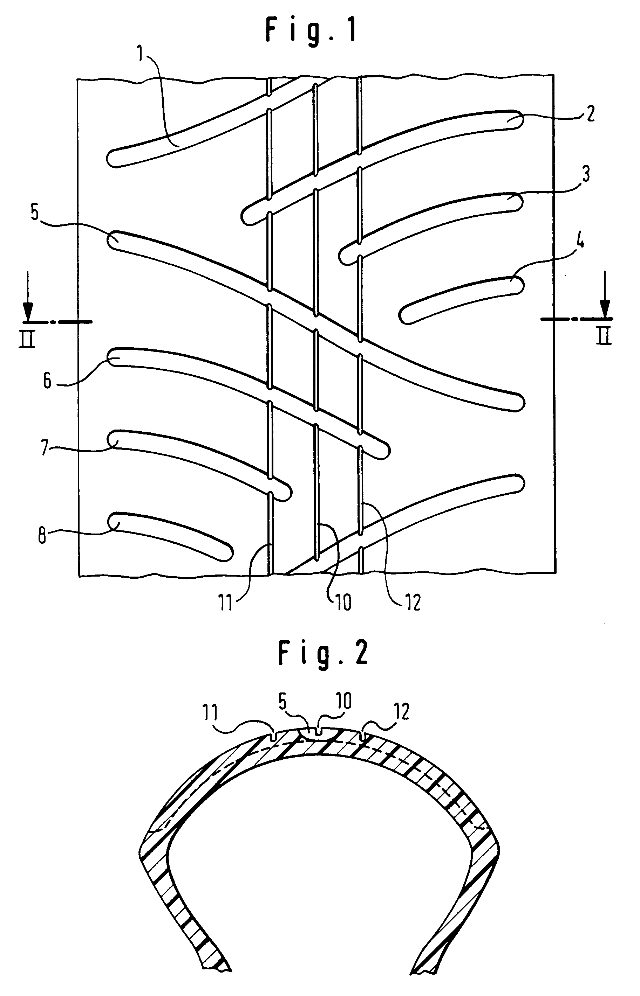

Fig. 1 zeigt in Aufsicht die Abwicklung eines Laufflächenabschnittes mit schräg zur Fahrtrichtung verlaufenden Profilrillen, die einen Anstellwinkel aufweisen, der weder rein längs- noch rein querorientiert ist. Es sind zwei Gruppen von jeweils leicht geschwungenen Profilrillen vorgesehen, von denen die eine Gruppe mit den Rillen 1 bis 4 eine zur gedachten Mittellinie entgegengesetzten Anstellwinkel als die andere Gruppe mit den Rillen 5 bis 8 aufweist. Dabei sind die ineinandergeschachtelten beiden Gruppen 1 bis 4 und 5 bis 8 jeweils in ihrer Länge systematisch gestaffelt, so daß sich ein gleichmäßiges Verschleißbild bei Abrieb und eine hohe Kurvenstabilität bei Schräglage ergeben.

Erfindungsgemäß ist nun die Lauffläche mit den allein schräg orientierten Profilrillen 1 bis 8 zusätzlich mit drei sehr schmalen, umlaufenden Rillen 10, 11 und 12 versehen, wobei sich die Rille 10 im Zenit der Lauffläche und die Rillen 11 und 12 seitlich davon befinden, wie man das auch aus dem Querschnitt nach Fig. 2 ersieht.

Diese umlaufenden Rillen 10, 11 und 12 schneiden die Schrägrillen 1, 2 und 3 bzw. 5, 6 und 7 voll an und weisen eine Tiefe von etwa 70 bis 100% der Tiefe der Schrägrillen auf, sind also üblicherweise weniger tief. Die Breite dieser umlaufenden Rillen 10, 11 und 12 beträgt maximal 1,5 mm.

Zweckmäßigerweise beträgt somit bei einer Profiltiefe der Schrägrillen 1 bis 8 von etwa 4 mm und einer Breite von 6 mm die Tiefe der Längsrillen etwa 3 mm und ihre Breite 1 mm.

Ferner sollte der Abstand der seitlichen Rillen 11 und 12 von der mittleren Rille 10 etwa 10 bis 20 mm, vorzugsweise 15 mm, betragen.

Durch diese zusätzlichen schmalen Längsrillen 10, 11 und 12 wird der Schräglaufkoeffizient des Reifens gesenkt, so daß damit einer Neigung zum Lenkerflattern entgegengewirkt wird, ohne daß damit aber die Kraftübertragungseigenschaften eingeschränkt werden.

Im Bereich kleiner Schräglaufwinkel um die Nullage entkoppeln diese Längsrillen 10, 11 und 12 die einzelnen Profilrippen zwischen sich und den Schrägrillen 1 bis 8. Durch die sehr geringe Breite der Längsrillen 10, 11 und 12 schließen diese sich aber bei Auftreten von Umfangs- und Seitenkräften, so daß dann die einzelnen zwischen den Schrägrillen liegenden Rippen wie ein kompakter zusammenhängender Block arbeiten und die entsprechenden Kräfte aufnehmen.

Vorstehend ist die Erfindung anhand eines speziellen Schrägrillenprofils erläutert worden. Dies stellt jedoch nur ein spezielles Ausführungsbeispiel dar, da die Erfindung selbstverständlich auch bei anderen Rillenkonfigurationen angewendet werden kann, die keine exakte Längs- oder Querorientierung aufweisen.

## Patentansprüche

1. Motorradreifen mit einer Lauffläche, in die quer oder im Winkel zur Umfangsrichtung verlaufende Profilrillen (1 - 8) eingeschnitten sind, die zwischen sich entsprechende Profilblöcke begrenzen, dadurch gekennzeichnet, daß die Lauffläche im Zenit und jeweils seitlich davon drei umlaufende, schmale Rillen (10, 11, 12) aufweist, die die schräg verlaufenden Profilrillen (1 - 8) anschneiden und deren Tiefe etwa 70 bis 100% der Tiefe der Hauptprofilrillen (1 - 8) beträgt.

2. Motorradreifen nach Anspruch 1, dadurch gekennzeichnet, daß die Breite der umlaufenden Rillen (10, 11, 12) maximal 1,5 mm beträgt.

3. Motorradreifen nach Anspruch 1 oder 2, dadurch gekennzeichnet, daß der jeweilige Abstand der beiden seitlichen Rillen (11, 12) von der mittleren Rille (10) 10 bis 20 mm, inbesondere 15 mm, beträgt.

## Claims

1. Motorcycle tyre with a tread in which tread grooves (1 - 8) running transversely or at an angle to the circumferential direction are cut, which grooves limit corresponding tread blocks between them, characterized in that the tread has three circumferential, narrow grooves (10, 11, 12) at the zenith and either side thereof, which grooves cut into the tread grooves (1 - 8) and the depth of which is approx. 70 to 100% of the depth of the main tread grooves (1 - 8).

2. Motorcycle tyre according to Claim 1, characterized in that the width of the circumferential grooves (10, 11, 12) is 1.5 mm maximum.

3. Motorcycle tyre according to Claim 1 or 2, characterized in that the distance between the two lateral grooves (11, 12) and the central groove (10) is 10 to 20 mm, particularly 15 mm, in each case.

## Revendications

1. Pneumatique pour motocyclette, comportant une surface de roulement dans laquelle sont taillées des rainures profilées (1 à 8) s'étendant transversalement ou sous un angle par rapport à la direction périphérique, qui délimitent entre elles des blocs profilés correspondants, caractérisé en ce que la surface de roulement présente au sommet et de chaque côté latéralement de celui-ci trois rainures périphériques étroites (10, 11, 12), qui recoupent les rainures profilées (1 à 8) s'étendant en oblique, et dont la profondeur est approximativement 70 à 100 % de la profondeur des rainures profilées principales (1 à 8).

2. Pneumatique pour motocyclette selon la revendication 1, caractérisé en ce que la largeur des rainures périphériques (10, 11, 12) s'élève au maximum à 1,5 mm.

3. Pneumatique pour motocyclette selon l'une ou l'autre des revendications 1 et 2, caractérisé en ce que la distance respective des deux rainures latérales (11, 12) par rapport à la rainure médiane (10) est de 10 à 20 mm, en particulier de 15 mm.
